# EUROPEAN PATENT APPLICATION

(11) **EP 1 588 982 A2**
(43) Date of publication of application: **26.10.2005**
(21) Application number: 05468008.7
(22) Date of filing: 18.04.2005
(51) Int. Cl.: C01D 3/14

(54) **Process for removing sodium sulfate from highly concentrated solution of sodium chloride**

(30) Priority: 23.04.2004 SI 200400125
(71) Applicant: Gajsek, Franc, 1412 Kisovec (SI)
(72) Inventor: Gajsek, Franc, 1412 Kisovec (SI)
(74) Representative: Flak, Antonija

(57) **Abstract**

A process for removal of sodium sulfate from a highly concentrated solution of sodium chloride solves the problem of reducing the concentration of sodium sulfate in the electrolyte used in the production of chlorine, so that the electrolyte can be returned back into the production process for repeated use.

After dechlorination the solution of drained electrolyte is collected in an accumulating vessel, wherein the solution is cooled down to 15 °C - 20 °C and its pH value is set to 9 to 13 by means of NaOH solution. The solution is then poured into a conically shaped vessel equipped with an assembly for deep-freezing, wherein the solution is frozen to -5 °C to -20 °C to facilitate the formation of sulfate crystals. In the melting phase of the process the sodium sulfate crystals segregate from the solution and drop to the bottom of the conical vessel.

## Description

### FIELD OF THE INVENTION

The present invention relates to a process for removing the sodium sulfate from a sodium chloride solution, especially from high-concentration sodium chloride solution, and more particularly, to a process of separating the sodium sulfate from the sodium chloride solution by using a freezing method.

### TECHNICAL PROBLEM

The technical problem solved by the present invention is to devise a process for elimination of sodium sulfate from a concentrated solution of sodium chloride used as electrolyte in manufacturing of chlorine by means of chloralkali electrolysis. Since due to dechlorinating of the electrolyte the concentration of the sodium sulfate is increased, in the resulting solution the concentration of the sulfate is too high, so the said solution is not suitable for repeated use in the electrolysis process. Consequently, large quantities of said solution could be accumulated in the production. The introduction of a purification process that should be both simple and acceptable as regards the economical and environmental aspects can solve this problem.

### BACKGROUND

To remove the sulfate from solutions the following methods are currently used:
- Drainage of the solution into a sewer system, which is not economical and is questionable as regards the environment, since a portion of electrolyte should be continuously discarded and replenished by a fresh electrolyte.
- Separation of sulfate by means of barium chloride, which is an expensive method and besides creates a problem of depositing the barium sulfate, produced after filtration, in a form of a cake.
- Removal of sulfate by ion exchangers, which is a demanding method.
- Nanofiltration, as described for example in patent CN1415540, which is expensive.

The methods mentioned above are either demanding and/or expensive or ecologically unacceptable.

Some solutions for removal of sulfates are disclosed in patents GB807057, US4180547 and EP0132820, and in application US2002114759 as well as in the pertinent patent US6676917B2. However, these methods either apply to a different technology, for example they use the zirconium and calcium compounds, or they tackle a problem of removing sulfates from solutions that are different from the solution in question in the case of the present invention and require therefore entirely different technological conditions, like crystallization of the sulfate at 50°C - 105°C, and entirely different processes of separation of sulfate crystals from the solutions, e.g. by filtering or centrifuging.

### DESCRIPTION OF THE INVENTION

The essential features of the process for removing the sodium sulfate from a solution of sodium chloride according to the invention are in that the electrolyte, which is a highly concentrated solution of sodium chloride, is collected in an accumulating vessel, wherein the temperature of the electrolyte is first adjusted to 15°C-20°C and then its pH value is adjusted by means of NaOH solution to 9 - 13, and that subsequently the electrolyte is poured into a conical vessel having two outlets, wherein the solution is first frozen to -5°C to -20°C and then melted, whereby the sulfate crystals formed during the freezing step are separated from the solution and collected on the bottom of the conical vessel.

In the first step of sulfate removal process according to the invention, after dechlorination the solution of drained electrolyte is collected in an accumulating vessel and cooled down to 15°C - 20 °C by means of a cooling snake pipe built in said vessel, and the pH of the solution is adjusted to a value between 9 to 13.

Then, the solution is poured into a conically shaped vessel equipped with an assembly for deep-freezing. The conical vessel has two outlets: through the first outlet on the bottom of the vessel the sediment is withdrawn, while through the second outlet, positioned on the wall of the vessel, the purified electrolyte can flow back to the manufacturing process.

The conical vessel includes a level-sensing switch designed to detect the level of the electrolyte and to switch the deep-freezing assembly on, whereby the freezing procedure is initiated. The lowest temperature to be ensured by the deep-freezing assembly is -35 °C. By means of a cooling snake pipe fitted in the conical vessel, the electrolyte freezes at -15°C to -30 °C, usually at -18°C to -20 °C, depending on the concentration of the sodium chloride in the electrolyte. When a revolving sensor, which circles slowly in the vessel, stops due to freezing of the electrolyte, the freezer is switched off to allow the frozen electrolyte to melt. In the melting phase of the process, the sodium sulfate crystals formed during freezing phase segregate from the electrolyte solution and drop to the bottom of the vessel. A few minutes after the electrolyte is completely melted, the re-usable electrolyte is poured out through the outlet in the wall. Next, the outlet in the bottom of the conical vessel is opened to withdraw the crystallized content, which is then accumulated in a collecting vessel.

Through a snake pipe fitted in the collecting vessel, a pump retums the purified electrolyte back into the manufacturing process.

The prerequisites for a good segregation of sodium sulfate crystals and for good sedimentation are: pH of the electrolyte should be in the range of 9 -13; the electrolyte should freeze completely, and the electrolyte should be at a standstill, i.e. it should not be stirred.

The process according to the invention ensures that up to 65 % of the sodium sulfate is removed from the electrolyte, so that a sulfate concentration of 10 g/l is decreased to a concentration of 3.5 g/l.

## Claims

1. A process for removing sodium sulfate from highly concentrated solution of sodium chloride, **characterized in that** after dechlorination the solution of drained electrolyte is collected in an accumulating vessel and cooled down to 15°C - 20°C by means of a cooling snake pipe, fitted in the accumulating vessel; that by means of NaOH solution the pH value of drained electrolyte is adjusted to 9 - 13 and that subsequently the solution is poured into a conical vessel equipped with a deep-freezing assembly; that the conical vessel has two outlets, wherein the first outlet on the bottom of the vessel serves for withdrawal of the sediment, while the second outlet, positioned on the wall of the vessel, serves for pouring out a purified electrolyte; that a level-sensing switch is fitted in the conical vessel to detect the level of the electrolyte and to switch on the deep-freezing assembly, whereby the freezing procedure is initiated; that the lowest temperature ensured by the deep-freezing assembly is -35 °C; that the cooling snake pipe fitted in the conical vessel freezes the electrolyte at -15 °C to -30 °C; that when a revolving sensor, which circles slowly in the vessel with electrolyte, stops due to freezing of the electrolyte, the deep-freezing assembly is switched off to allow the frozen electrolyte to melt, that during melting of frozen electrolyte the sodium sulfate crystals, which were formed during the freezing phase, segregate from electrolyte and drop to the bottom of the conical vessel; that a few minutes after the electrolyte is completely melted, the re-usable electrolyte is poured out through the outlet in the wall, and that finally the outlet in the bottom of the conical vessel is opened to withdraw the crystallized content, which is accumulated in a collector vessel.

2. A process as claimed in claim 1, **characterized in that** the cooling snake pipe of the deep-freezing assembly, fitted in the conical vessel, freezes the electrolyte at -15°C to -30 °C depending on the concentration of the sodium chloride in the electrolyte.
